# EUROPEAN PATENT APPLICATION

(11) **EP 2 001 139 A2**
(43) Date of publication of application: **10.12.2008**
(21) Application number: 07702228.3
(22) Date of filing: 30.01.2007
(51) Int. Cl.: H04B 3/32

(54) **METHOD AND APPARATUS FOR AVOIDING FALSE INITIATING OF xDSL TRANSCEIVER**

(30) Priority: 29.04.2006 CN 200610079088
(71) Applicant: Huawei Technologies Co., Ltd., Longgang District, Shenzhen Guangdong 518129 (CN)
(72) Inventor: ZHOU, Jun, Shenzhen, Guangdong 518129 (CN); ZHANG, Xinjun, Shenzhen, Guangdong 518129 (CN)
(74) Representative: Körber, Martin Hans
(86) International application number: PCT/CN2007/000333
(87) International publication number: WO 2007/124640

(57) **Abstract**

The present invention discloses a method for avoiding false initialization of xDSL transceivers. Prior to the initialization of xDSL transceivers, the method includes: by the transmitting port of a first xDSL transceiver, sending a message about the transmitting port to the corresponding receiving port of a second xDSL transceiver; by the receiving port of the second xDSL transceiver, returning a response message to the transmitting port of the first xDSL transceiver according to the received message; by the first xDSL transceiver, judging the response message received by the transmitting port, and, if the received message has a certain relationship with the message sent by the transmitting port of the first xDSL transceiver, proceeding with the subsequent initialization process; otherwise, quitting the initialization process of the transmitting port. The method of the present invention prevents the xDSL transceiver or its ports from entering the false initialization state.

## Description

### Field of the Invention

The present invention relates to digital subscriber line (xDSL) access technologies, and in particular, to a method and apparatus for avoiding false initialization of xDSL transceivers.

### Background of the Invention

The xDSL technology is a high-speed data transmission technology implemented through an unshielded twist pair (UTP), including asymmetrical digital subscriber line (ADSL), very-high-bit-rate digital subscriber line (VDSL), integrated services digital network (ISDN)-based digital subscriber line (IDSL), and single-pair high-bit-rate digital subscriber line (SHDSL), collectively called "xDSL technology".

If no empirical knowledge is available, it is necessary to define a common carrier frequency, and a session can physically go on only when the transceivers on both sides of the xDSL line work at the common carrier frequency simultaneously. On this basis, upon startup, an xDSL transceiver needs to undergo handshake, channel discovery, training, channel analysis and exchange, which are collectively called "initialization", before the xDSL transceiver works normally. The handshake process discovers the peer transceiver and determines the working mode; the channel discovery process detects the channel features, detects the noise, and exchanges working parameters between the transceivers at both sides of the line; the training process performs training on the adaptive systems such as the time domain equalizer and the echo canceller; the channel analysis and exchange process determines the carrier capability of the line and exchanges the determined parameters. The foregoing processes are performed according to the specified protocols of the International Telecommunication Union (ITU).

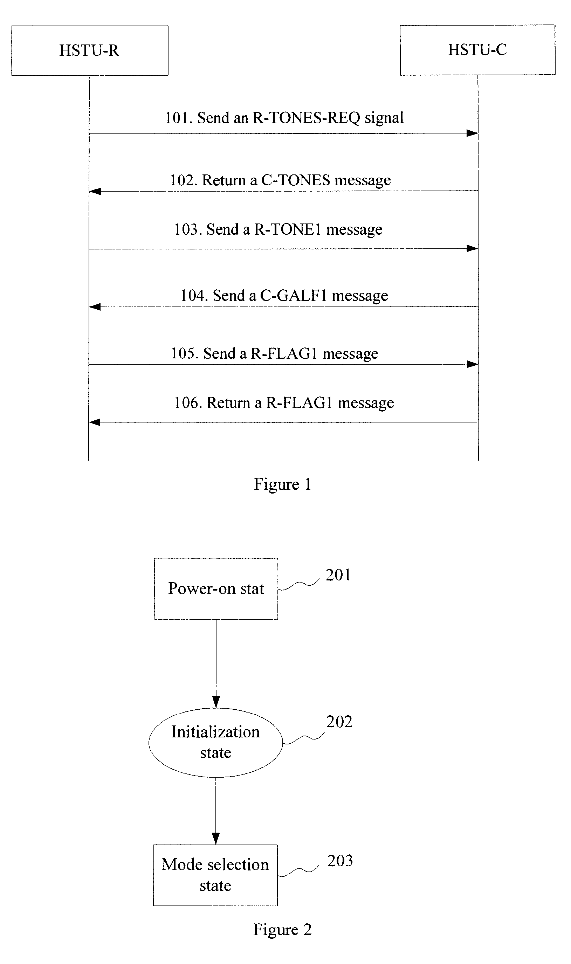

For ease of description, the xDSL transceiver that works in the handshake protocol state and is located at the customer premises is called "HSTU-R", and the xDSL transceiver that works in the handshake protocol state and is located at the central office is called "HSTU-C". As shown in Figure 1, the process of discovering the peer transceiver on the line during the handshake includes the following steps:

Step 101: The HSTU-R sends a customer premises state request (R-TONES-REQ) to the peer side, and specifically, it changes the phase shift keying (PSK) modulation signal of the phase every 16 ms; before the foregoing request is sent, neither the HSTU-R nor the HSTU-C sends any signal, and the peer side can only receive various noise signals.

Step 102: After detecting the R-TONES-REQ signal, the HSTU-C sends a central office state (C-TONES) message as a response to the HSTU-R.

Step 103: After the HSTU-R detects the C-TONES message, the HSTU stops sending signals for a duration of 50-500 ms, and then sends a first customer premises state (R-TONE1) message.

Step 104: After detecting the R-TONE1 message, the HSTU-C sends a C-GALF1 message as a response.

Step 105: After detecting the C-GALF1 message, the HSTU-R sends an R-GALF1 message to the HSTU-C.

Step 106: After detecting the R-FLAG1 message, the HSTU-C returns a C-FLAG1 message and enters the handshake initialization state; if the HSTU-R detects the C-FLAG1 message successfully, it also enters the handshake initialization state.

In the foregoing process of exchanging signals, the HSTU-R keeps tracking the HSTU-C signal frequency. After the R-TONE1 message is sent, the frequency accuracy of the HSTU-R should increase from the initial ± 200 ppm to ± 50 ppm.

Figure 2 shows the state transition in a handshake process. As shown in Figure 2, the handshake process includes three main states: power-on state 201, handshake initialization state 202, and mode selection state 203. Figure 1 describes the process from the power-on state 201 to the handshake initialization state 202. This process lets the HSTU-R determine whether there is an HSTU-C in the ready state on the peer side. In the transition from the handshake initialization state 202 to the mode selection state 203, the HSTU-C and the HSTU-R determine a common working mode, and both should be able to work in this mode normally so that the subsequent process can proceed normally.

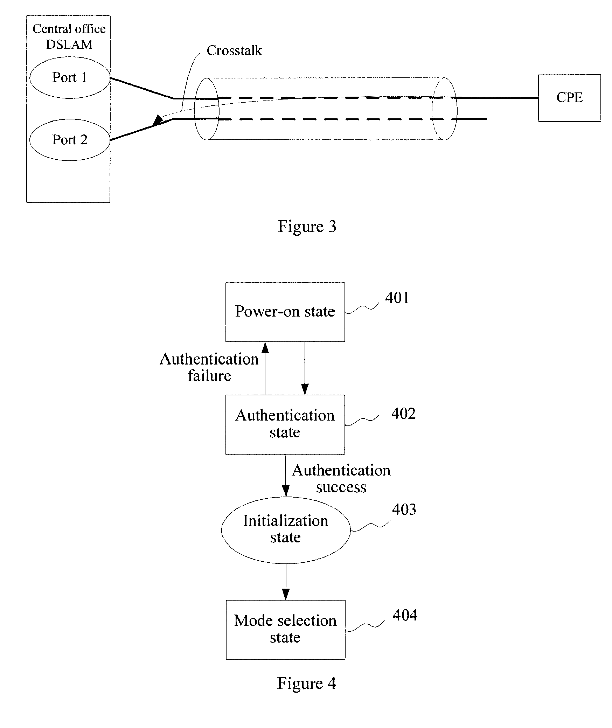

Without electromagnetic shielding, the UTP lines cause interference to each other, which is known as crosstalk. As shown in Figure 3, the central office DSLAM (namely, HSTU-C) has two ports. Port 1 is connected to a remote customer premises equipment (CPE, namely, HSTU-R), and port 2 is not connected to any CPE. When the CPE sends signals, due to crosstalk, port 2 receives the same signals when port 1 receives the signals; when the central office DSLAM sends signals, the signals sent by port 2 are much weaker than the signals sent by port 1 after being attenuated through the crosstalk function, and are scarcely received by the CPE.

The discovery process of the transceiver shown in Figure 1 reveals that, so long as all the signals sent by the CPE can be received by port 2 correctly each time, port 2 finishes the transceiver discovery process when port 1 finishes the transceiver discovery process, and that the power-on state in Figure 2 changes to the handshake initialization state 202; likewise, the state of port 2 changes from the handshake initialization state 202 in Figure 2 to the mode selection state 203.

In this way, port 2 finishes the whole handshake process and enters a false connection state or even a false final working state, which leads to the following consequences:

Severe interference to other lines: After the handshake process is finished, port 2 enters the channel discovery stage, in which port 2 sends stronger signals that cover a wide frequency range, causing severe interference to other lines; however, port 2 may pass the channel discovery stage, the training stage, and the channel analysis and exchange stage successfully, and enter a false normal working state. In the foregoing process, port 2 sends useless signals continuously, which causes continuous interference to other lines.

Slow response to the access CPE: If port 2 in the false working state is connected to a CPE, port 2 does not respond to the signals of the CPE normally until the current state of port 2 is damaged by a new CPE and a timeout occurs, thus delaying the synchronization.

Other consequences are: waste of energy, and reporting of false connection states.

### Summary of the Invention

Therefore, the embodiments of the present invention propose a method for avoiding false initialization of xDSL transceivers caused by crosstalk. The method is applied in the process of initializing xDSL transceivers, and includes:

by the transmitting port of a first xDSL transceiver, sending a message about the transmitting port to the corresponding receiving port of a second xDSL transceiver;

by the receiving port of the second xDSL transceiver, returning a response message to the transmitting port of the first xDSL transceiver according to the received message; and

by the first xDSL transceiver, judging the response message received by the transmitting port; if the received message has a preset relationship with the message sent by the transmitting port of the first xDSL transceiver, proceeding with the subsequent initialization process; otherwise, quitting the initialization process of the transmitting port.

A method for avoiding false initialization of a central office xDSL transceiver in an embodiment of the present invention includes:

by the transmitting port of the central office xDSL transceiver, sending a message about the transmitting port to the peer side of the line; and

by the central office xDSL transceiver, judging whether a response message is received within a time limit of Tj; and, if so, proceeding with the subsequent steps of the initialization process; otherwise, quitting the initialization process.

A method for avoiding false initialization of a customer premises xDSL transceiver in an embodiment of the present invention includes:

by the receiving port of the customer premises xDSL transceiver, generating a response message according to a received message about the transmitting port of a central office xDSL transceiver, and sending the response message to the transmitting port of the central office xDSL transceiver; and

by the customer premises xDSL transceiver, judging whether the receiving port receives an acknowledgement message within a time limit of Td after sending the response message; and, if so, proceeding with the subsequent steps of the initialization process; otherwise, quitting the initialization process of the receiving port.

The present invention discloses a customer premises xDSL transceiver and a central office xDSL transceiver for avoiding false initialization.

The customer premises xDSL transceiver includes an initialization processing module and at least one transceiver port, further including:

an authentication response module, adapted to generate an authentication response message according to the authentication data in the authentication message received by the port, and send the authentication response message to the port that receives the authentication message; and

an authentication confirmation module, adapted to judge whether an acknowledgement message is received within a time limit of Td after the authentication response module sends an authentication response message; and, if so, notify the initialization processing module to perform the subsequent steps of the initialization process.

The central office xDSL transceiver includes an initialization processing module and at least one transceiver port, further including:

an authentication data generating module, adapted to generate authentication data related to the specific port of the transceiver, where the generated authentication data is sent to an authentication information processing module and an authentication judging module;

an authentication information processing module, adapted to generate an authentication message that contains the authentication data, and send the authentication message to the corresponding port; receive the authentication response message from the port of the central office xDSL transceiver; retrieve the authentication data from the received authentication response message; and send the authentication data to the authentication judging module; and

an authentication judging module, adapted to judge whether the two groups of authentication data corresponding to the same port of the central office xDSL transceiver match each other, where the two groups of authentication data come from the authentication information processing module and the authentication data generating module respectively; if so, send an authentication success message to the initialization processing module of the central office xDSL transceiver, which proceeds with the subsequent initialization steps; if not, send an authentication failure message to the initialization processing module of the central office xDSL transceiver, which controls the port to return to the power-on state.

Alternatively, the central office xDSL transceiver includes an initialization processing module and at least one transceiver port, further including:

an authentication data generating module, adapted to generate a group of frequency numbers or frequency offsets related to the specific port of the transceiver as authentication data of the port; and

an authentication information processing module, adapted to generate an authentication message that contains the authentication data according to the authentication data from the authentication data generating module and send the authentication message to the corresponding port. The authentication information processing module further includes: a frequency adjusting unit, adapted to adjust the working frequency of the port that sends the authentication message according to the authentication data after the port sends the authentication message. After receiving an authentication response message, the authentication information processing module sends an authentication success message to the initialization processing module of the central office xDSL transceiver, and the initialization processing module proceeds with the subsequent steps of initialization. If no authentication response message is received, the authentication information processing module sends an authentication failure message to the initialization processing module of the central office xDSL transceiver, and the initialization processing module controls the port to return to the power-on state, and then the frequency adjusting unit recovers the original working frequency of the port.

As seen in the foregoing technical solution, an authentication process is added to the process of initializing an xDSL transceiver, and the authentication signals vary with ports; the authentication succeeds only after the signals are received from the peer port of the line; the xDSL transceiver or its port that fails the authentication returns to the power-on state. This avoids false initialization of xDSL transceivers caused by crosstalk, prevents the port in the false initialization stage or false working state from interfering with other lines, and provides solutions to slow response to the access CPE and waste of energy.

### Brief Description of the Drawings

Figure 1 is a flowchart of interaction in the xDSL transceiver discovery process according to the prior art;

Figure 2 shows the state transition of an xDSL transceiver in the handshake stage according to the prior art;

Figure 3 shows the crosstalk generated in an xDSL line;

Figure 4 shows the state transition of an xDSL transceiver in the handshake stage according to the first, second, and third embodiments of the present invention;

Figure 5 shows the interaction in the authentication process according to the first, second, and third embodiments of the present invention;

Figure 6 shows the processing of the HSTU-R in the authentication process according to the first embodiment of the present invention;

Figure 7 shows the processing of the HSTU-C in the authentication process according to the first embodiment of the present invention;

Figure 8 shows the processing of the HSTU-C in the authentication process according to the second embodiment of the present invention; and

Figure 9 is a flowchart of interaction in the xDSL transceiver discovery process with authentication according to the fourth embodiment of the present invention.

### Detailed Description of the Invention

Crosstalk leads to false initialization of xDSL transceivers because the DSL standards disregard crosstalk, and regard channels as private channels. In fact, a twisted pair provides inferior isolation of signals. Consequently, a channel is occupied by more than one pair of transceivers or transceiver ports, and other transceivers or transceiver ports can also receive such information. In a sense, an xDSL channel is a common channel.

The essence of the present invention is: a process of judging validity of signals is added to the initialization stage of an xDSL transceiver; in this process, the xDSL transceiver port at one side of the line judges the validity of the received signals; if the received signals are from the customer premises xDSL transceiver port at the peer side on the line, the authentication succeeds and the subsequent process proceeds; otherwise, the authentication fails, and the xDSL transceiver exits the initialization process. The validity authentication process may be added to the handshake stage. For ease of description, the xDSL transceiver port that performs authentication is called a "transmitting port", and the port at the peer side of the line is called a "receiving port".

To make the objectives, technical solution and merits of the present invention clearer, the present invention is hereinafter described in detail with reference to accompanying drawings and preferred embodiments.

As shown in Figure 4, an authentication state 402 is added between the power-on state 401 and the handshake initialization state 403. If the authentication succeeds, the xDSL transceiver or its port can enter the handshake initialization state 403 and the subsequent mode selection state; if the authentication fails, the state returns to the power-on state 401. In this way, the xDSL transceiver or its port that fails the authentication does not pass the initialization stage, thus avoiding false initialization effectively.

Embodiment 1: The first authentication method.

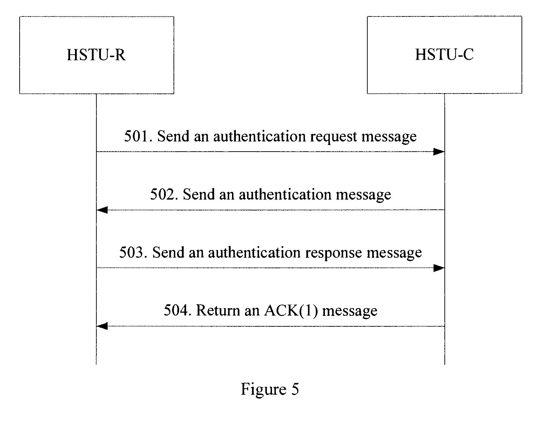

In the first embodiment, an authentication process is added between the HSTU-R and the HSTU-C after the xDSL transceiver discovery process. Suppose that port A of the HSTU-R is connected to port A' of the HSTU-C through a line. As shown in Figure 5, a process of successful authentication includes the following steps:

Step 501: Port A of the HSTU-R sends an authentication request message to port A' of the HSTU-C.

Step 502: After receiving the authentication request message, port A' of the HSTU-C sends an authentication message that contains authentication data to port A. The authentication data varies with ports, and may be random data or information related to the port itself, for example, frame ID, slot ID, and port number of port A'.

Step 503: The HSTU-R retrieves authentication data from the authentication message received by port A, generates an authentication response message that contains the authentication data, and sends the authentication response message to port A' of the HSTU-C.

Step 504: After receiving the authentication response message, port A' of the HSTU-C retrieves authentication data from the authentication response message, and compares the retrieved authentication data with its own authentication data. If the authentication data is consistent, the authentication succeeds, and an ACK(1) message is sent to port A of the HSTU-R, and port A' enters the handshake initialization state; after receiving the ACK(1) message, port A of the HSTU-R also enters the handshake initialization state.

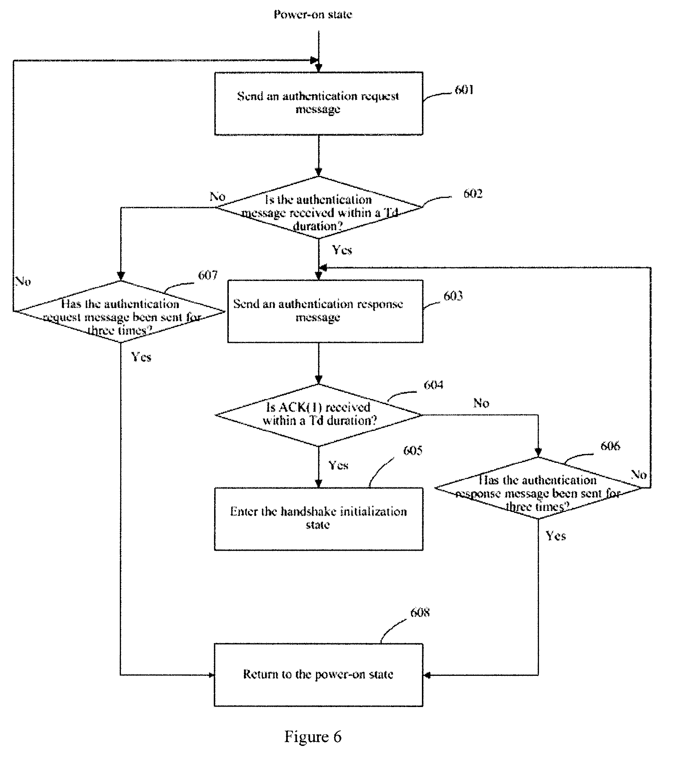

As shown in Figure 6, the processing of the HSTU-R in the foregoing authentication process includes the following steps:

Step 601: Port A of the HSTU-R sends an authentication request message to the HSTU-C.

Step 602: The HSTU-R judges whether port A receives the authentication message within a time limit of Td after an authentication request message is sent; if so, the process goes to step 603; otherwise, the process goes to step 607, where the Td duration is 50 ms.

Step 603: The HSTU-R retrieves authentication data from the authentication message received by port A, and sends an authentication response message that contains the retrieved authentication data to port A' of the HSTU-C.

Step 604: The HSTU-R judges whether port A receives an ACK(1) message within a time limit of Td after an authentication response message is sent; if so, the process goes to step 605; otherwise, the process goes to step 606, where the Td duration is 50 ms.

Step 605: The authentication succeeds; the HSTU-R finishes the authentication process, and port A enters the handshake initialization state.

Step 606: The HSTU-R judges whether the authentication response message has been sent for three times; and, if so, the process goes to step 608; otherwise, the process goes to step 603.

Step 607: The HSTU-R judges whether the authentication request message has been sent for three times; and, if so, the process goes to step 608; otherwise, the process goes to step 601.

Step 608: Port A of the HSTU-R returns to the power-on state, that is, it exits the initialization process.

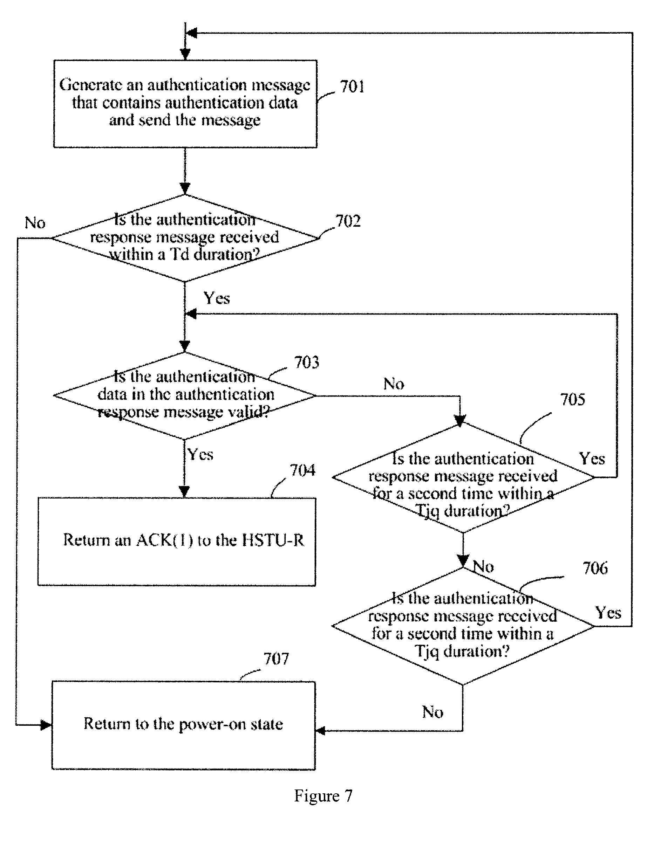

Likewise, as shown in Figure 7, the processing of the HSTU-C includes the following steps:

Step 701: The HSTU-C generates an authentication message that contains the authentication data, and sends it to port A of the HSTU-R through port A'.

Step 702: The HSTU-C judges whether port A' receives an authentication response message within a time limit of Tj; if so, the process goes to step 703; otherwise, the process goes to step 707, where the Tj duration is 100 ms.

Step 703: The HSTU-C judges whether the authentication data in the authentication response message received by port A' is valid; and, if so, the process goes to step 704; otherwise, the process goes to step 705.

Step 704: Port A' of the HSTU-C sends an ACK(1) message to port A of the HSTU-R, and port A' finishes the authentication process.

Steps 705-706: The HSTU-C judges whether port A' receives the authentication response message or the authentication request for a second time within a time limit of Tjq; if port A' receives the authentication response message for a second time, the process goes to step 803; if port A' receives the authentication request for a second time, the process goes to step 701; if port A' receives neither of the messages for a second time, the process goes to step 707, where the Tjq duration is 500 ms.

Step 707: Port A' of the HSTU-C returns to the power-on state, that is, it exits the initialization process.

To strengthen the robustness of the authentication data, the authentication data should undergo the cyclic redundancy check (CRC) and parity check measures. Accordingly in step 603, the following steps are added before the HSTU-R sends an authentication response message: The HSTU-R performs CRC and/or parity check on the authentication data in the received authentication message; if no error is found, an authentication response message that contains the authentication data is sent to port A' through port A; otherwise, the process goes to step 607.

In step 703, before the validity of the received authentication data is checked, these steps are added: The HSTU-C performs CRC and/or parity check on the authentication data in the received authentication response message; if no error is found, the authentication data is further authenticated; otherwise, the process goes to step 705 that follows authentication failure.

To implement the foregoing process, the central office xDSL transceiver in this embodiment not only needs to contain the initialization processing module for performing the initialization steps and the transceiver ports, but also needs to have the following additional modules:

an authentication data generating module, adapted to generate authentication data related to a specific port of the transceiver, where "related to a specific port" means that the authentication data generated for the ports varies between the ports and may be different random numbers, or the authentication data is generated according to the port information; and the generated authentication data is sent to an authentication information processing module and an authentication judging module;

an authentication information processing module, adapted to: (i) generate an authentication message that contains the authentication data according to the authentication data from the authentication data generating module, and send the authentication message to the corresponding port, through which the authentication message is sent to the corresponding port of the customer premises xDSL transceiver at the peer side; and(ii) receive the authentication response message from the port of the customer premises xDSL transceiver, retrieve the authentication data from the received authentication response message, and send the authentication data to an authentication judging module; and

an authentication judging module, adapted to judge whether the two groups of authentication data corresponding to the same port of the central office xDSL transceiver match each other, where the two groups of authentication data come from the authentication information processing module and the authentication data generating module respectively; if so, send an authentication success message to the initialization processing module of the central office xDSL transceiver, which proceeds with the subsequent initialization steps; if not, send an authentication failure message to the initialization processing module of the central office xDSL transceiver, which controls the port to return to the power-on state.

The authentication information processing module may further include a receiving waiting unit, which contains a timer with a duration of Tj. The timer is started when the authentication information processing module sends an authentication message. The receiving waiting unit judges whether an authentication response message or an authentication request is received from the same port corresponding to the authentication message before timeout of the timer. If an authentication response message is received, the timer stops, and the authentication information processing module retrieves authentication data from the received authentication response message and performs the subsequent steps. If an authentication request is received, the authentication information processing module sends the authentication message corresponding to the port again. If neither of the messages is received, the receiving waiting unit judges whether the count of timeouts of the timer reaches the preset threshold (in this embodiment, the preset threshold is two times); and, if so, the receiving waiting unit notifies the initialization processing module to resume the power-on state of the port; or, if not, the receiving waiting unit waits for a duration of Tjq, and then starts the timer again and checks timeout of the timer.

In this embodiment, the customer premises xDSL transceiver not only includes the existing initialization processing module and ports, but also needs to have the following additional modules:

an authentication request module, adapted to generate an authentication request message, and send it through a port of the customer premises xDSL transceiver;

an authentication response module, adapted to generate an authentication response message according to the authentication data in the authentication message received by the port, and send the authentication response message to the port that receives the authentication message; and

an authentication confirmation module, adapted to judge whether an acknowledgement message is received within a time limit of Td after the authentication response module sends an authentication response message. If an acknowledgement message is received within the time limit, the authentication confirmation module notifies the initialization processing module to perform the subsequent steps of the initialization process.

If no acknowledgement message is received, the authentication confirmation module further judges whether the authentication request module has sent the authentication request for N times. If the authentication request has not been sent for N times, the authentication confirmation module notifies the authentication request module to send the authentication request again. If the authentication request has been sent for N times, the authentication confirmation module further judges whether the authentication response module has sent the authentication response message for N times. If the authentication response message has not been sent for N times, the authentication confirmation module notifies the authentication response module to send the authentication response message again. If the authentication response message has been sent for N times, the authentication confirmation module notifies the initialization processing module to resume the power-on state of the port.

Embodiment 2: The second authentication method.

First of all, the concept of a carrier group is introduced briefly below. As mentioned above, the ports of xDSL transceivers at both sides of the line must work at a common carrier frequency to enable normal communication. In the standard, the carrier frequency is defined by a frequency number (N) in a signaling cluster. A 4.3124 kHz signaling cluster represents the signaling with carrier frequencies of N * 4.3125 kHz. This signaling cluster contains several uplink carrier groups, respectively defined as A43, B43, C43, and J43. Each uplink carrier group corresponds to a downlink carrier group. The frequency number (N) and the transmit power of each carrier group are shown in Table 1:

**Table 1**

| Carrier Group | Uplink Carrier Group | | Downlink Carrier Group | | Transmission Mode |
|---|---|---|---|---|---|
| | Frequency Number (N) | Maximum Transmit Power (dBm) | Frequency Number (N) | Maximum Transmit Power (dBm) | |
| A43 | 9, 17, 25 | -1.65 | 40,56,64 | -3.65 | Duplex |
| B43 | 37,45,53 | -1.65 | 72,88,96 | -3.65 | Duplex |
| C43 | 7,9 | -1.65 | 12, 14, 64 | -3.65 | Duplex |
| J43 | 9, 17, 25 | -1.65 | 72,88,96 | -3.65 | Duplex |

The authentication process in the second embodiment is the same as that in the first embodiment, and can also be illustrated by Figure 5. In the second embodiment, the authentication data generated in step 502 is the frequency numbers of any uplink carrier group (N1, N2, N3). After sending an authentication message that contains authentication data through port A', the HSTU-C adjusts the working frequency of port A' to the carrier frequency specified by the authentication data. In step 503, the HSTU-R adjusts the working frequency of port A to the carrier frequency specified in the authentication data after retrieving the authentication data from the authentication message received by port A, and sends an authentication response message at this frequency. The authentication response message is only a prompt signal, without carrying authentication data. After sending the authentication response message, the HSTU-R recovers the original carrier frequency of port A. In step 504, after receiving the authentication response message, port A' of the HSTU-C returns ACK(1) without judging the contents of the message, and then the HSTU-R recovers the original carrier frequency of port A.

The processing of the HSTU-R in the authentication process in the second embodiment is basically the same as that shown in Figure 6 except the following differences:

In the second embodiment, step 603 is: The HSTU-R retrieves authentication data from the authentication message received by port A, adjusts the working frequency of port A to the carrier frequency specified in the authentication data, sends an authentication response message at this frequency, and then recovers the original carrier frequency of port A; the authentication response message is only a prompt signal, without carrying any authentication data.

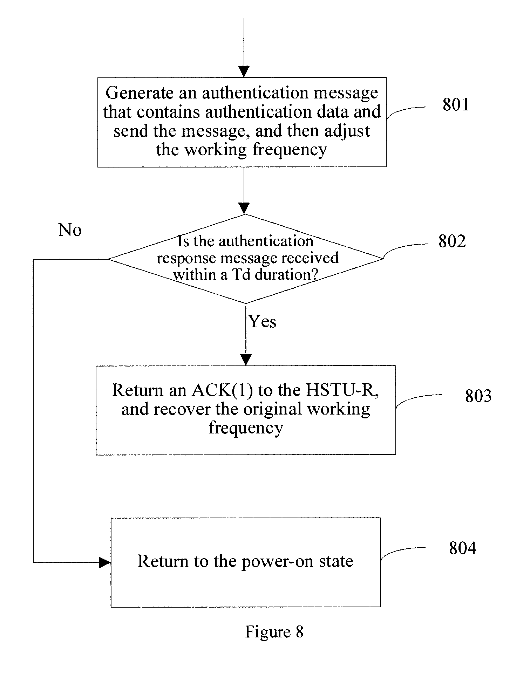

As shown in Figure 8, the processing of the HSTU-C in the authentication process of the second embodiment includes the following steps:

Step 801: The HSTU-C generates an authentication message that contains the authentication data, and sends it to the HSTU-R through port A'; and then the HSTU-C adjusts the working frequency of port A' to the carrier frequency specified by the authentication data.

Step 802: The HSTU-C judges whether port A' receives an authentication response message within a time limit of Tj; if so, the process goes to step 803; otherwise, the process goes to step 804, where the Tj duration is 100 ms.

Step 803: Through port A', the HSTU-C sends an ACK(1) message to port Aof the HSTU-R, and then the original carrier frequency of port A' is recovered and the authentication process is finished.

Step 804: Port A' of the HSTU-C returns to the power-on state, that is, it exits the initialization process.

As shown in Figure 3, in the technical solution in the second embodiment, after the CPE receives an authentication message from port 1, the authentication response message of the CPE is sent according to the carrier group specified by port 1. Therefore, only port 1 of the central office DSLAM can receive the authentication response message correctly. Due to a different receiving frequency, port 2 is unable to receive the authentication response message, and returns to the power-on state after timeout. This avoids false initialization of the xDSL transceiver as intended by the present invention.

The authentication data may be an offset of an uplink carrier group, so that the data length can be further reduced. For example, suppose that the authentication data is -2, and that the originally used uplink carrier group is A43 (9, 17, 25). Therefore, the carrier group used when the HSTU-R sends an authentication response message is (7, 15, 25), that is, each frequency number of the A43 carrier group plus the authentication data is equal to (9-2, 17-2, 25-2); the HSTU-C uses the uplink carrier group (7, 15, 25) plus the offset to detect the authentication response message immediately after sending an authentication message. In this way, the same technical objective is achieved through smaller authentication data.

The structure of the xDSL transceiver in the second embodiment is different from that in the first embodiment, and functions implemented by the xDSL transceiver are also a little different. In the second embodiment, the central office xDSL transceiver not only includes the existing initialization processing module and transceiver ports, but also needs to have two additional modules: an authentication data generating module and an authentication information processing module, but has no authentication judging module.

The authentication data generating module is adapted to generate authentication data related to a specific port of the transceiver according to the instruction of the authentication information processing module. Unlike the authentication data generating module in the first embodiment, the authentication data generating module in the second embodiment generates the authentication data which is a group of frequency numbers or a frequency offset, and the authentication data varies with ports.

The authentication information processing module is adapted to generate an authentication instruction to the authentication data generating module. The instruction may be sent directly, or sent upon reception of an authentication request from the customer premises xDSL transceiver. Specifically, the authentication information processing module is adapted to generate an authentication message that contains the authentication data according to the authentication data from the authentication data generating module, and send the authentication message to the corresponding port. Through this port, the authentication message is sent to the corresponding port of the customer premises xDSL transceiver at the peer side. The authentication processing module further includes a frequency adjusting unit, which is adapted to adjust the working frequency of the port that sends an authentication message according to the authentication data after the port sends the authentication message. When receiving an authentication response message, the authentication information processing module sends an authentication success message to the initialization processing module of the central office xDSL transceiver, and the initialization processing module proceeds with the subsequent initialization steps; if no authentication response message is received, the authentication information processing module sends an authentication failure message to the initialization processing module, and the initialization processing module controls the port to go back to the power-on state. Then the frequency adjusting unit recovers the original working frequency of the port.

Likewise, the authentication information processing module may include a receiving waiting unit which works in the same way as in the first embodiment.

In this embodiment, the customer premises xDSL transceiver not only includes the existing initialization processing module and ports, but also needs to have the following additional modules:

an authentication request module, adapted to generate an authentication request message, and send it through a port of the customer premises xDSL transceiver;

an authentication response module, adapted to resolve the authentication data in the authentication message from the port, and obtain the information about the carrier frequency, further including a frequency adjusting unit, adapted to adjust the working frequency of the port that receives the authentication message according to the carrier frequency information, and then return an authentication response message to the corresponding port of the central office xDSL transceiver through the port, where the authentication response message may be only a prompt signal without carrying authentication data; and

an authentication confirmation module, adapted to judge whether an acknowledgement message is received within a time limit of Td after the authentication response module sends an authentication response message. If an acknowledgement message is received within the time limit, the authentication confirmation module notifies the initialization processing module to perform the subsequent steps of the initialization process.

If no acknowledgement message is received, the authentication confirmation module further judges whether the authentication request module has sent the authentication request for N times. If the authentication request has not been sent for N times, the authentication confirmation module notifies the authentication request module to send the authentication request again. If the authentication request has been sent for N times, the authentication confirmation module furthers judge whether the authentication response module has sent the authentication response message for N times. If the authentication response message has not been sent for N times, the authentication confirmation module notifies the authentication response module to send the authentication response message again. If the authentication response message has been sent for N times, the authentication confirmation module notifies the initialization processing module to resume the power-on state of the port.

Embodiment 3: The third authentication method. The third embodiment is a combination of the first and second embodiments. That is, the carrier group is changed at the time of sending an authentication response message, and the authentication data needs to be checked. The implementation process of the third embodiment can be inferred through the first and second embodiments, and is not described further.

The xDSL transceiver in the third embodiment is a combination of the features of the xDSL transceivers in the first and second embodiments, and can be derived by the technicians in this field from the xDSL transceivers in the first and second xDSL transceivers without additional creative work.

The authentication request message, authentication message and authentication response message are defined according to the ITU G994.1 standards, and are not described in detail here.

To avoid false initialization of the existing xDSL transceiver ports, the duration T1 in the foregoing authentication process in the present invention should be greater than the waiting timeout duration in the interaction process specified by the standards. Taking Figure 3 as an example, suppose that port 1 is designed according to the method of the present invention, and that port 2 is an existing port in the prior art. When port 1 and port 2 finish the power-on process simultaneously, port 1 and the CPE enter the authentication state and port 2 enters the handshake initialization state directly. Then message interaction is performed between port 1 and the CPE in the authentication state, while port 2 waits for a message in the handshake initialization state all along. When port 1 and the CPE finish the authentication and enter the handshake initialization state, port 2 returns to the power-on state because no correct message is received. This avoids false initialization of the xDSL transceiver port.

Embodiment 4: The fourth authentication method.

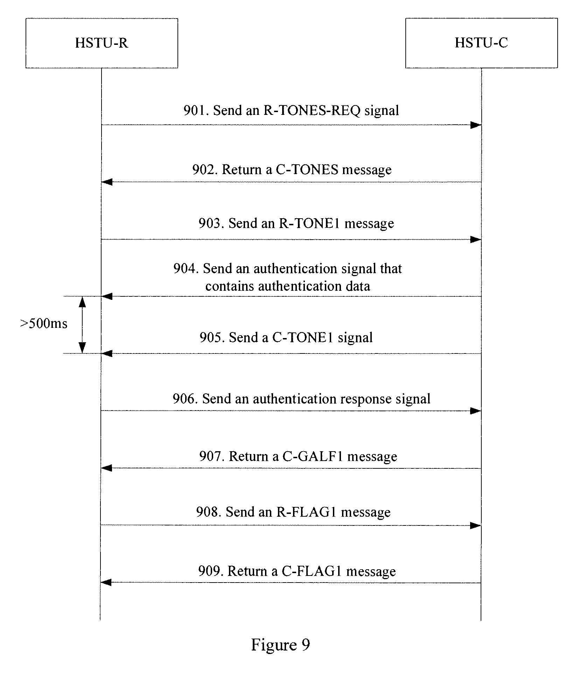

The fourth embodiment differs from the foregoing three embodiments in that the authentication process occurs not after the xDSL transceiver discovery process, but during the xDSL transceiver discovery process. As shown in Figure 9, the xDSL transceiver discovery process with authentication according to the fourth embodiment of the present invention includes the following steps:

Step 901: Port A of the HSTU-R sends an R-TONES-REQ request signal to port A' of the peer side, and in more particular, it changes the PSK signal of the phase every 15 ms; before the foregoing request is sent, neither the HSTU-R nor the HSTU-C sends any signal, and the peer side can only receive various noise signals.

Step 902: After detecting the R-TONES-REQ signal of port A', the HSTU-C sends a C-TONES message as a response to port A of the HSTU-R.

Step 903: After the HSTU-R detects the C-TONES message of port A, port A of the HSTU-C stops sending signals for a duration of 50-500 ms, and then sends an R-TONE 1 message to port A' of the peer side.

Step 904: After detecting the R-TONES1 message of port A', the HSTU-C triggers the validity authentication mechanism, that is, it sends an authentication signal with authentication data to port A of the HSTU-R.

Step 905: T ms after the authentication signal is sent, port A' of the HSTU-C sends a C-TONE1 signal to port A of the HSTU-R, where the T duration is not less than 500 ms.

Step 906: The HSTU-R retrieves authentication data from the authentication signal received by port A, and generates an authentication response signal that contains the authentication data. When receiving the C-TONE1 signal, port A sends an authentication response signal to port A' of the HSTU-C.

Step 907: The HSTU-C judges whether the authentication data in the authentication response signal received by port A' is valid; and, if so, the HSTU-C returns a C-GALF1 message as a response; otherwise, port A' of the HSTU-C goes back to the power-on state, that is, it exits the initialization process.

Step 908: After detecting the C-GALF1 message, port A of the HSTU-R sends an R-GALF1 message to port A' of the HSTU-C.

Step 909: After detecting the R-FLAG1 message of port A', the HSTU-C returns a C-FLAG1 message to port A, and enters the handshake initialization state; if the HSTU-R detects the C-FLAG1 message of port A successfully, it also enters the handshake initialization state.

In step 905 in the foregoing process, the HSTU-C sends the C-TONE1 signal only after waiting for a duration; in step 906, the STU-R sends the authentication response signal only after receiving the C-TONE1 signal. This prevents false initialization of the existing xDSL transceiver port. Taking Figure 3 as an example, suppose that port 1 is designed according to the method of the present invention, and that port 2 is an existing port in the prior art. After receiving an R-TONE1 signal, port 2 does not send an authentication signal, but sends a C-GALF1 signal directly, and then waits for the CPE to return an R-FLAG1 signal; after receiving an R-TONE1 signal, port 1 triggers the authentication mechanism, and spends more than 500 ms in finishing the authentication according to the process in the fourth embodiment, and then sends a C-GALF1 signal; when the CPE receives the C-GALF1 signal and returns an R-FLAG1 signal, port 2 can receive the R-FLAG1 signal, but it returns to the power-on state due to timeout, and cannot respond to the R-FLAG1 signal. This avoids false initialization of the xDSL transceiver port in the prior art.

It should be appreciated that the foregoing is only preferred embodiments of the invention and is not for use in limiting the invention. Any modification, equivalent substitution, and improvement without departing from the spirit and principle of this invention should be covered in the scope of protection of the invention.

## Claims

1. A method for avoiding false initialization of digital subscriber line (xDSL) transceivers, **characterized in that**, the method is applied in the process of initializing the xDSL transceivers and comprises:
by a transmitting port of a first xDSL transceiver, sending a message about the transmitting port to a corresponding receiving port of a second xDSL transceiver;
by the receiving port of the second xDSL transceiver, returning a response message to the transmitting port of the first xDSL transceiver according to the received message; and
by the first xDSL transceiver, judging the response message received by the transmitting port; if the received message has a preset relationship with the message sent by the transmitting port of the first xDSL transceiver, continuing the subsequent initialization process; otherwise, quitting the initialization process of the transmitting port.

2. The method of claim 1, wherein the step of sending a message related to the transmitting port by the transmitting port of the first xDSL transceiver comprises: sending an authentication message that contains the authentication data corresponding to the transmitting port; and
the step of returning a response message to the transmitting port of the first xDSL transceiver by the receiving port of the second xDSL transceiver comprises: generating an authentication response message according to the authentication data.

3. The method of claim 2, wherein: if the result of the first xDSL transceiver judging the response message received by the transmitting port is positive, the method further comprises: by the transmitting port of the first xDSL transceiver, sending an authentication success acknowledgement message to the receiving port of the second xDSL transceiver; by the second xDSL transceiver, proceeding with the subsequent initialization steps after receiving the acknowledgement message; and
if the judgment result is negative, the method further comprises: if the receiving port of the second xDSL transceiver fails to receive the acknowledgement message due to timeout, quitting the initialization process.

4. The method of claim 3, wherein before sending an authentication message, the method further comprises: by the second xDSL transceiver, sending an authentication request to the first xDSL transceiver.

5. The method of claim 2, wherein before the receiving port of the second xDSL transceiver sends an authentication response message, the method further comprises: by the second xDSL transceiver, retrieving the authentication data from the received authentication message, and generating an authentication response message that contains the retrieved authentication data; and
the set relationship between the message received by the transmitting port of the first xDSL transceiver and the message sent by the transmitting port of the first xDSL transceiver is: authentication data of the authentication response message received by the transmitting port of the first xDSL transceiver matches the authentication data of the transmitting port.

6. The method of claim 5, wherein the authentication data is a random number that varies with the transmitting port, or information related to the transmitting port.

7. The method of claim 2, wherein the authentication data is information related to an uplink carrier frequency;
after the transmitting port of the first xDSL transceiver sends an authentication message, the method further comprises: by the first xDSL transceiver, adjusting the working frequency of the transmitting port to the carrier frequency specified by the authentication data;
before the receiving port of the second xDSL transceiver sends an authentication response message, the method further comprises: by the second xDSL transceiver, adjusting the working frequency of the receiving port to the carrier frequency specified by the authentication data;
after the receiving port of the second xDSL transceiver sends an authentication response message, the method further comprises: by the second xDSL transceiver, recovering the working frequency of the receiving port to the original carrier frequency;
the set relationship between the message received by the transmitting port of the first xDSL transceiver and the message sent by the transmitting port of the first xDSL transceiver is: the first xDSL transceiver judges whether the transmitting port receives an authentication response message; if so, the relationship exists; otherwise, no relationship exists; and after the judgment, the method further comprises: recovering the original carrier frequency of the transmitting port of the first xDSL transceiver.

8. The method of claim 7, wherein the authentication data is the frequency number of an uplink carrier group, or the offset of the frequency number of an uplink carrier group.

9. The claim of claim 4, wherein after the second xDSL transceiver sends an authentication request message, the method further comprises: by the second xDSL transceiver, judging whether an authentication message is received within a duration of Td after the authentication request message is sent; if so, proceeding with the subsequent steps; otherwise, further judging whether the authentication request has been for sent for N times; if so, exiting the initialization process; otherwise, sending an authentication request to the first xDSL transceiver and continuing with this step.

10. The method of claim 9, wherein after the receiving port of the second xDSL transceiver sends an authentication response message, the method further comprises: by the second xDSL transceiver, judging whether the receiving port receives an acknowledgement message within a duration of Td after an authentication response message is sent; if so, proceeding with the subsequent steps; otherwise, judging whether the receiving port has sent the authentication response message for N times; if so, exiting the initialization process of the receiving port; otherwise, sending an authentication response message to the transmitting port of the first xDSL transceiver through the receiving port.

11. The method of claim 10, wherein before the first xDSL transceiver judges the authentication response message received by the transmitting port, the method further comprises: by the first xDSL transceiver, judging whether the transmitting port receives an authentication response message within a duration of Tj; if so, proceeding with the subsequent steps; otherwise, exiting the initialization process of the transmitting port.

12. The method of claim 11, wherein if the result of the first xDSL transceiver judging the authentication response message received by the transmitting port is negative, the method further comprises: by the transmitting port of the first xDSL transceiver, waiting for a duration of Tjq; before timeout of waiting, if the transmitting port receives the authentication response message for a second time, proceeding with the step of judging the authentication response message received by the transmitting port; otherwise, exiting the initialization process of the transmitting port of the first xDSL transceiver.

13. The method of claim 12, wherein: if the transmitting port of the first xDSL transceiver receives the authentication request for a second time before timeout of waiting, the transmitting port of the first xDSL transceiver sends an authentication message; otherwise, the transmitting port of the first xDSL transceiver exits the initialization process.

14. The method of claim 4, wherein the step of sending an authentication request to the transmitting port of the first xDSL transceiver by the receiving port of the second xDSL transceiver comprises: by the receiving port of the second xDSL transceiver, sending an R-TONE1 message to the transmitting port of the first xDSL transceiver; and
the authentication success acknowledgement message is a C-GALF1 message.

15. The method of claim 14, wherein after the transmitting port of the first xDSL transceiver sends an authentication message, the method further comprises: by the transmitting port of the first xDSL transceiver, waiting for a duration of T, and then sending a C-TONE1 signal to the second xDSL transceiver; and
the step of sending an authentication response message by the receiving port of the second xDSL transceiver comprises: by the second xDSL transceiver, staying in the waiting state after generating an authentication response message; when the receiving port receives a C-TONE1 signal, sending an authentication response message to the transmitting port of the first xDSL transceiver through the receiving port.

16. The method of any of claims 4 to 15, wherein the authentication data contains a check bit;
after the receiving port of the second xDSL transceiver receives the authentication message, the method further comprises: by the second xDSL transceiver, checking the authentication data in the authentication message received by the receiving port; if no error is found, proceeding with the subsequent steps; otherwise, further judging whether the receiving port has sent the authentication request message for three times; if so, exiting the initialization process of the receiving port; otherwise, sending an authentication request message to the transmitting port of the first xDSL transceiver through the receiving port; and
before the first xDSL transceiver judges the authentication response message received by the transmitting port, the method further comprises: by the first xDSL transceiver, checking the authentication data in the authentication response message; if no error is found, proceeding with the subsequent steps; otherwise, going to the steps that are performed when the result of the first xDSL transceiver judging the authentication response message received by the transmitting port is negative.

17. A method for avoiding false initialization of a central office xDSL transceiver, **characterized by** comprising:
by the transmitting port of the central office xDSL transceiver, sending a message about the transmitting port to the peer side of the line; and
by the central office xDSL transceiver, judging whether a response message is received within a time limit of Tj; and, if so, proceeding with the subsequent steps of the initialization process; otherwise, quitting the initialization process.

18. The method of claim 17, wherein the message related to the transmitting port is: an authentication message that contains the authentication data corresponding to the transmitting port;
the response message is: an authentication response message generated according to the authentication data.

19. A method for avoiding false initialization of a customer premises xDSL transceiver, **characterized by** comprising:
by the receiving port of the customer premises xDSL transceiver, generating a response message according to a received message about the transmitting port of a central office xDSL transceiver, and sending the response message to the transmitting port of the central office xDSL transceiver; and
by the customer premises xDSL transceiver, judging whether the receiving port receives an acknowledgement message within a time limit of Td after sending the response message; and, if so, proceeding with the subsequent steps of the initialization process; otherwise, quitting the initialization process of the receiving port.

20. A central office xDSL transceiver, **characterized by** comprising an initialization processing module and at least one transceiver port, and further comprising:
an authentication data generating module, adapted to generate authentication data related to the specific port of the transceiver, wherein the generated authentication data is sent to an authentication information processing module and an authentication judging module;
an authentication information processing module, adapted to generate an authentication message that contains the authentication data, and send the authentication message to the corresponding port; receive the authentication response message from the port of the central office xDSL transceiver; retrieve the authentication data from the received authentication response message; and send the authentication data to the authentication judging module; and
an authentication judging module, adapted to judge whether the two groups of authentication data corresponding to the same port of the central office xDSL transceiver match each other, wherein the two groups of authentication data come from the authentication information processing module and the authentication data generating module respectively; if so, send an authentication success message to the initialization processing module of the central office xDSL transceiver, which proceeds with the subsequent initialization steps; if not, send an authentication failure message to the initialization processing module of the central office xDSL transceiver, which controls the port to return to the power-on state.

21. The central office xDSL of claim 20, wherein the authentication information processing module further comprises:
a receiving waiting unit that contains a timer with a duration of Tj, wherein: the timer is started when the authentication information processing module sends an authentication message; the receiving waiting unit judges whether an authentication response message or an authentication request is received from the same port corresponding to the authentication message before timeout of the timer; if an authentication response message is received, the timer stops, and the authentication information processing module retrieves authentication data from the received authentication response message and performs the subsequent steps; if an authentication request is received, the authentication information processing module sends the authentication message corresponding to the port again; if neither of the messages is received, the receiving waiting unit judges whether the count of timeouts of the timer reaches the preset threshold; and, if so, the receiving waiting unit notifies the initialization processing module to resume the power-on state of the port; or, if not, the receiving waiting unit waits for a duration of Tjq, and then starts the timer again and checks timeout of the timer.

22. A central office xDSL transceiver, **characterized by** comprising an initialization processing module and at least one transceiver port, further comprising:
an authentication data generating module, adapted to generate a group of frequency numbers or frequency offsets related to the specific port of the transceiver as authentication data of the port; and
an authentication information processing module, adapted to generate an authentication message that contains the authentication data according to the authentication data from the authentication data generating module and send the authentication message to the corresponding port, comprising: a frequency adjusting unit, adapted to adjust the working frequency of the port that sends the authentication message according to the authentication data after the port sends the authentication message, wherein after receiving an authentication response message, the authentication information processing module sends an authentication success message to the initialization processing module of the central office xDSL transceiver, and the initialization processing module proceeds with the subsequent steps of initialization; if no authentication response message is received, the authentication information processing module sends an authentication failure message to the initialization processing module of the central office xDSL transceiver, and the initialization processing module controls the port to return to the power-on state, and then the frequency adjusting unit recovers the original working frequency of the port.

23. A customer premises xDSL transceiver, comprising an initialization processing module and at least one transceiver port, further comprising:
an authentication response module, adapted to generate an authentication response message according to the authentication data in the authentication message received by the port, and send the authentication response message to the port that receives the authentication message; and
an authentication confirmation module, adapted to judge whether an acknowledgement message is received within a time limit of Td after the authentication response module sends an authentication response message; and, if so, notify the initialization processing module to perform the subsequent steps of the initialization process.

24. The customer premises xDSL transceiver of claim 23, further comprising an authentication request module, adapted to generate an authentication request message, and send the generated authentication request message through the port of the customer premises xDSL transceiver.

25. The customer premises xDSL transceiver of claim 24, wherein the authentication confirmation module is further adapted to: if no acknowledgement message is received within a duration of Td, further judge whether the authentication request module has sent the authentication request for N times; if the authentication request has not been sent for N times, notify the authentication request module to send the authentication request again; if the authentication request has been sent for N times, further judge whether the authentication response module has sent the authentication response message for N times; if the authentication response message has not been sent for N times, notify the authentication response module to send the authentication response message again; if the authentication response message has been sent for N times, notify the initialization processing module to resume the power-on state of the port.

26. The customer premises xDSL transceiver of claim 23, 24 or 25, wherein the authentication response module further comprises: a frequency adjusting unit, adapted to adjust the working frequency of the port according to the carrier frequency contained in the authentication data before the port that receives the authentication message returns an authentication response message; and recover the original working frequency of the port after the port receives the authentication acknowledgment message.
